# EUROPÄISCHE PATENTSCHRIFT

(11) **EP 1 401 955 B1**
(45) Veröffentlichungstag und Bekanntmachung des Hinweises auf die Patenterteilung: **11.07.2007**
(21) Anmeldenummer: 02751005.6
(22) Anmeldetag: 06.06.2002
(51) Int. Cl.: C08L 59/02, C08L 101/00, C08L 79/02, C08K 5/3435, C08K 5/3492

(54) **STABILISIERTE THERMOPLASTISCHE FORMMASSEN**
STABILISED THERMOPLASTIC MOULDING COMPOUNDS
MATIERES MOULABLES THERMOPLASTIQUES STABILISEES

(30) Priorität: 19.06.2001 DE 10129231
(43) Veröffentlichungstag der Anmeldung: 31.03.2004
(73) Patentinhaber: BASF Aktiengesellschaft, 67056 Ludwigshafen (DE)
(72) Erfinder: DAMES, Burkhardt, 64646 Heppenheim (DE); SAUERER, Wolfgang, 67134 Birkenheide (DE)
(86) Internationale Anmeldenummer: PCT/EP2002/006193
(87) Internationale Veröffentlichungsnummer: WO 2002/102896

(56) Entgegenhaltungen:
- EP-A- 0 732 363
- EP-A- 0 855 424
- PATENT ABSTRACTS OF JAPAN vol. 018, no. 145 (C-1178), 10. März 1994 (1994-03-10) & JP 05 320475 A (TORAY IND INC), 3. Dezember 1993 (1993-12-03)

## Beschreibung

Die Erfindung betrifft thermoplastische Formmassen, enthaltend als wesentliche Komponenten
A) 29 bis 99,9 Gew.-% mindestens eines thermoplastischen Polyoxymethylenhomo- oder -copolymerisates oder deren Mischungen,
B) 1 ppb bis 5 Gew.-% mindestens eines Polyethyleniminhomo- oder -copolymerisates,
C) 0,05 bis 2 Gew.-% mindestens einer sterisch gehinderten Aminverbindung,
   sowie darüber hinaus
D) 0 bis 70 Gew.-% weiterer Zusatzstoffe,
wobei die Gewichtsprozente der Komponenten A) bis D) stets 100 % ergeben.

Weiterhin betrifft die Erfindung die Verwendung der erfindungsgemäßen Formmassen zur Herstellung von Formkörpern jeglicher Art sowie die hierbei erhältlichen Formkörper jeglicher Art. Außerdem betrifft die Erfindung ein Verfahren zur Erhöhung der thermischen Stabilität, insbesondere bei thermischer Belastung und/oder Dieselkraftstoffbeständigkeit von Polyoxymethylenen, sowie die hierbei erhältlichen Polyoxymethylenformkörper.

Zum Stande der Technik gehört Thermoplaste, insbesondere Polyoxymethylen-Formmassen durch geeignete Additive zu stabilisieren. Zu diesem Zwecke werden beispielsweise Antioxidantien, wie z.B. sterisch gehinderte Phenolderivate zugesetzt. Derartige Phenolderivate sind z.B. in der DE-A-27 02 661 zusammengestellt. Nach der Lehre der EP-A-19 761 werden glasfaserverstärkten Polyoxymethylen-Formmassen zur Verbesserung der Schlagzähigkeit Alkoxymethylmelamine einverleibt. Polyoxymethylen-Formmassen, die gegen die Einwirkung von Wärme im Temperaturbereich von 100 bis 150°C über einen längeren Zeitraum stabilisiert sind, werden nach Angaben der EP-A-52 740 durch den Zusatz eines teilveretherten speziellen Melamin-Formaldehyd-Kondensationsproduktes erhalten. Die DE-A-3 011 280 beschreibt stabilisierte Oxymethylencopolymermassen, die als Stabilisator eine Mischung aus mindestens einem ami nosubstituierten Triazins, mindestens einem sterisch gehinderten Phenol und mindestens einer metallhaltigen Verbindung enthalten. nosubstituierten Triazins, mindestens einem sterisch gehinderten Phenol und mindestens einer metallhaltigen Verbindung enthalten. Die metallhaltigen Verbindungen bestehen hierbei vorzugsweise aus Kalium-, Calcium-, Magnesiumhydroxid oder Magnesiumcarbonat.

Trotz dieser Maßnahmen besitzen bekannte Polyoxymethylen-Formmassen jedoch für einige Anwendungen eine nicht ausreichende thermische Stabilität, die die Verarbeitung zu Formkörpern nachteilig beeinflußt und beispielsweise zu Ablagerungen am Formwerkzeug oder zur Verschlechterung der Entformbarkeit beitragen und/oder beim späteren Gebrauch der Formkörper zu Verfärbungen und Verminderungen der mechanischen Eigenschaften führt. Nachteilig ist ferner, daß die Mischungen noch Formaldehydaddukte enthalten können, welche bei der Verarbeitung bei erhöhten Temperaturen durch Formaldehydabspaltung zu Geruchsbelästigungen führen können.

Aus den DE-A 36 28 560, DE-A 36 28 561 und DE-A 36 28 562 sind Polyoxymethylen-Formmassen bekannt, die als Stabilisatoren eine Mischung aus sterisch gehinderten Phenolen und Erdalkalisilikaten und Erdalkaliglycerophosphaten enthalten. Ausweislich der Beschreibung können als weitere Costabilisatoren auch Polyamide eingesetzt werden. Diese Massen weisen zwar eine bessere Thermostabilität auf, doch bestehen hinsichtlich der Farbqualität noch Verbesserungswünsche.

Thermoplaste mit einer hohen Kristallinität weisen eine gute Beständigkeit gegen zahlreiche Chemikalien auf, wobei die hohe Beständigkeit gegen Kraftstoffe (einschließlich den methanolhaltigen), Fette, Öle, Brems- und Kühlflüssigkeiten besonders hervorgehoben wird. Polyacetal beispielsweise zeigt nur eine geringe Quellung und demzufolge eine hohe Dimensionsstabilität. Die hohe Verarbeitungsschwindung von Polyacetal (im Vergleich zu anderen technischen Thermoplasten) wird bei der Herstellung von Staugehäusen (Kraftstoffentnahmeeinrichtung) genutzt, da die in diese Anwendung integrierten Steckerverbindungen eine hohe Dichtigkeit aufweisen müssen. Gleichzeitig ist eine hohe Bruchdehnung des für das Staugehäuse verwendeten Materials notwendig, um die vom Gesetz geforderten Crashanforderungen zu erfüllen. Auch hierfür ist Polyacetal der Werkstoff der Wahl sowie für die gewünschte hohe Wärmeformbeständigkeit im Bereich der Kraftstoffhin- und rückführungssysteme.

Aufgrund der Tendenz im Automobilsektor immer leistungsfähigere und gleichzeitig sparsamere Motoren zu entwickeln, sind speziell im Bereich der Dieselfahrzeuge unerwartete Schwierigkeiten aufgetreten. Um eine optimale Verbrennung des Dieselkraftstoffe zu erreichen, wird der Dieselkraftstoff bei Drücken um 1300 bar zerstäubt. Anschließend erfolgt eine abrupte Entspannung auf 1 bar. Bei diesem Vorgang im sogenannten common rail system können kurzzeitig Temperaturen bis 160°C im Motorraum auftreten. Dies hat zur Folge, daß sich alle mit dem Dieselkraftstoff in Berührung kommenden Teile entsprechend stark aufheizen und durch Mischung von kaltem Kraftstoff aus dem Tank und heißem Kraftstoff aus dem Motorbereich im Kraftstoffhin- und -rückführungssystem Temperaturen um 90°C auftreten. Selbst im Tankbereich können noch Temperaturen über 90°C auftreten, da vom Kraftstoffgebersystem überschüssiger, noch heißer Dieselkraftstoffe in den Tank zurückgeführt wird. Unter diesen Bedingungen zersetzt sich Polyacetal und schlägt sich in den Leitungen nieder, so daß diese zum einen brüchig und zum anderen undurchlässig für den Dieselkraftstoff werden.

Darüber hinaus enthalten Dieselkraftstoffe Schwefel bzw. Schwefelverbindungen, welche die POM-Matrix zusätzlich schädigen, da insbesondere unter Luftzufuhr saure Schwefelverbindungen entstehen, welche das Polymer abbauen.

Derartige Schwefelverbindungen finden sich ebenso in KFZ-Teilen, welche vulkanisierte Elastomere enthalten oder von solchen umhüllt werden (z.B. Lagerelemente im Betriebs- und Lenkungsbereich, welche aus Staubschutzgründen Elastomermanschetten aufweisen.

In der EP-A 855 924 werden als Additive sterisch gehinderte Amine vorgeschlagen. Nachteilig sind hierbei die schlechteren Farbeigenschaften des Polyoxymethylens sowie der Einsatz größerer Mengen eines teuren Additivs.

Polyethylenimine als solche sind ebenfalls bekannt und werden bei der Papierherstellung verwendet: sie aggregieren die Papierfasern und binden störende Begleitstoffe, werden also als Aggregationsmittel und als Flockungs- bzw. Komplexierungsmittel verwendet, und verbessern die Naßfestigkeit des Papiers. Außerdem werden Polyethylenimine bei der Herstellung von Farben und Lacken und zur Wasserbehandlung verwendet, außerdem als Klebstoffschichten in laminierten Polypropylenmehrschichtfolien, sowie bei der Erdöl- und Erdgasförderung, schließlich zur Immobilisierung von Enzymen. Siehe Ullmann's Encyclopedia of Industrial Chemistry, 6. Aufl., 1999 Electronic Release, Verlag VCH Weinheim, Stichwort "Aziridines", Kap. 6 "Uses" (nachfolgend als "Ullmann Electronic Release" zitiert). Die Verwendung von Polyethyleniminen als Bestandteil von thermoplastischen Formmassen wurde in den jüngeren Anmeldungen DE-A 100 30 553, DE-A 100 30 635 und DE-A 100 30 632 vorgeschlagen.

Aufgabe der vorliegenden Erfindung war es daher, thermoplastische Formmassen zur Verfügung zu stellen, welche eine höhere thermische Stabilität, insbesondere bei thermischer Belastung bei gleichzeitig guten Farbeigenschaften und eine höhere Dieselkraftstoffbeständigkeit aufweisen.

Demgemäß wurden die eingangs definierten Formmassen gefunden. Bevorzugte Ausführungsformen sind den Unteransprüchen zu entnehmen.

Weiterhin wurde die Verwendung derartiger Formmassen zur Herstellung von Formkörpern jeglicher Art sowie die hierbei erhältlichen Formkörper gefunden sowie ein Verfahren zur Erhöhung der thermischen Stabilität und/oder Dieselkraftstoffbeständigkeit von Polyoxymethylenen, derartig erhältliche POM-Formkörper und die Verwendung von Polyethyleniminen zur Erhöhung der thermischen Stabilität und/oder Dieselkraftstoffbeständigkeit von Polyoxymethylenen.

Als Komponente A) enthalten die erfindungsgemäßen Formmassen 29 Gew.-% bis 99,9 Gew.-%, mindestens eines thermoplastischen Polyoxymethylenhomo- oder -copolymerisates. Bevorzugt beträgt der Anteil von A) 40 Gew.-% bis 99,9 Gew.-%, und insbesondere 30 bis 80 Gew.-%. Diese Angaben sind auf die Formmassen A) bis D) bezogen. (Es bedeuten ppb parts per billion (by weight) = 1:10⁹ und ppm parts per million (by weight) = 1:10⁶). Polyoxymethylenhomo- oder -copolymerisate

Derartige Polymerisate sind dem Fachmann an sich bekannt und in der Literatur beschrieben.

Ganz allgemein weisen diese Polymere mindestens 50 mol-% an wiederkehrenden Einheiten -CH₂O- in der Polymerhauptkette auf.

Die Homopolymeren werden im allgemeinen durch Polymerisation von Formaldehyd oder Trioxan hergestellt, vorzugsweise in der Gegenwart von geeigneten Katalysatoren.

Im Rahmen der Erfindung werden Polyoxymethylencopolymere als Komponente A bevorzugt, insbesondere solche, die neben den wiederkehrenden Einheiten -CH₂O- noch bis zu 50, vorzugsweise 0,1 bis 20, insbesondere 0,3 bis 10 mol-% und ganz besonders bevorzugt 2 bis 6 mol-% an wiederkehrenden Einheiten 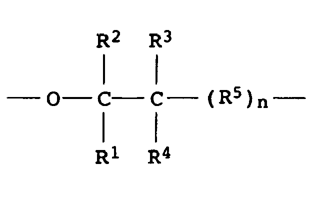 wobei R¹ bis R⁴ unabhängig voneinander ein Wasserstoffatom, eine C₁-bis C₄-Alkylgruppe oder eine halogensubstituierte Alkylgruppe mit 1 bis 4 C-Atomen und R⁵ eine -CH₂-, -CH₂O-eine C₁-bis C₄-Alkyl- oder C₁-bis C₄-Haloalkyl substituierte Methylengruppe oder eine entsprechende Oxymethylengruppe darstellen und n einen Wert im Bereich von 0 bis 3 hat. Vorteilhafterweise können diese Gruppen durch Ringöffnung von cyclischen Ethern in die Copolymere eingeführt werden. Bevorzugte cyclische Ether sind solche der Formel 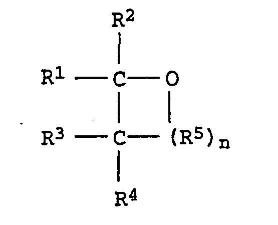 wobei R¹ bis R⁵ und n die oben genannte Bedeutung haben. Nur beispielsweise seien Ethylenoxid, 1,2-Propylenoxid, 1,2-Butylenoxid, 1,3-Butylenoxid, 1,3-Dioxan, 1,3-Dioxolan und 1,3-Dioxepan als cyclische Ether genannt sowie linare Oligo- oder Polyformale wie Polydioxolan oder Polydioxepan als Comonomere genannt.

Als Komponente A) ebenfalls geeignet sind Oxymethylenterpolymerisate, die beispielsweise durch Umsetzung von Trioxan, einem der vorstehend beschriebenen cyclischen Ether mit einem dritten Monomeren, vorzugsweise bifunktionellen Verbindungen der Formel 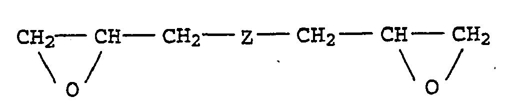 und/oder 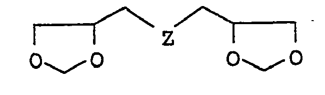 wobei Z eine chemische Bindung, -O-, -ORO- (R= C₁-bis C₈-Alkylen oder C₂-bis C₈-Cycloalkylen) ist, hergestellt werden.

Bevorzugte Monomere dieser Art sind Ethylendiglycid, Diglycidylether und Diether aus Glycidylen und Formaldehyd, Dioxan oder Trioxan im Molverhältnis 2 : 1 sowie Diether aus 2 mol Glycidylverbindung und 1 mol eines aliphatischen Diols mit 2 bis 8 C-Atomen wie beispielsweise die Diglycidylether von Ethylenglykol, 1,4-Butandiol, 1,3-Butandiol, Cyclobutan-1,3-diol, 1,2-Propandiol und Cyclohexan-1,4-diol, um nur einige Beispiele zu nennen.

Verfahren zur Herstellung der vorstehend beschriebenen Homo- und Copolymerisate sind dem Fachmann bekannt und in der Literatur beschrieben, so daß sich hier nähere Angaben erübrigen.

Die bevorzugten Polyoxymethylencopolymere haben Schmelzpunkte von mindestens 150°C und Molekulargewichte (Gewichtsmittelwert) M_{w} im Bereich von 5000 bis 250000, vorzugsweise von 7000 bis 150000.

Endgruppenstabilisierte Polyoxymethylenpolymerisate, die an den Kettenenden C-C-Bindungen aufweisen, werden besonders bevorzugt.

Als Komponente A) können insbesondere auch Produkte eingesetzt werden, die noch einen relativ hohen Anteil (im allg. > 0,1 Gew.-%) an thermisch instabilen Anteilen enthalten. Die Komponenten C) und D) insbesondere, wenn sie vor der Mischung mit dem Polyoxymethylen vorgemischt werden, stabilisieren derartige Roh-Polyoxymethylene sehr gut.

Die thermoplastischen Formmassen enthalten als Komponente B) erfindungsgemäß 1 ppb bis 5 Gew.-% mindestes eines Polyethylenimin-Homopolymerisats oder -Copolymerisates. Bevorzugt beträgt der Anteil von B) 1 ppm bis 1 Gew.-% und insbesondere 0,01 bis 0,1 Gew.-%. Diese Angaben beziehen sich auf die Formmasse aus A) bis D). Die Bezeichnungen ppb und ppm bedeuten "parts per billion" bzw. "parts per million".

Unter Polyethyleniminen im Sinne der vorliegenden Erfindung sollen sowohl Homo- als auch Copolymerisate verstanden werden, welche beispielsweise nach den Verfahren in Ullmann Electronic Release unter dem Stichwort "Aziridine" oder gemäß WO-A 94/12560 erhältlich sind.

Die Homopolymerisate sind im allgemeinen durch Polymerisation von Ethylenimin (Aziridin) in wäßriger oder organischer Lösung in Gegenwart von säureabspaltenden Verbindungen, Säuren oder LewisSäuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen kann im allgemeinen mittels ¹³C-NNR Spektroskopie bestimmt werden.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylentest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentetramin, Dihexamethylentriamin, Aminopropylethylendiamin und Bisaminopropylethylendiamin.

Polyethylenimine weisen üblicherweise ein mittleres Molekulargewicht (Gewichtsmittel) von 100 bis 3.000.000, vorzugsweise von 800 bis 2.000.000 auf (bestimmt mittels Lichtstreuung). Die Viskosität gemäß ISO 2555 (bei 20°C) liegt im allgemeinen im Bereich von 100 bis 200.000 mPas, vorzugsweise von 1000 bis 100.000 mPas.

Darüber hinaus eignen sich vernetzte Polyethylenimine, die durch Reaktion von Polyethyleniminen mit bi- oder polyfunktionellen Vernetzern erhältlich sind, welche als funktionelle Gruppe mindestens eine Halogenhydrin-, Glycidyl-, Aziridin-, Isocyanateinheit oder ein Halogenatom aufweisen. Als Beispiele seinen Epichlorhydrin oder Bischlorhydrinether von Polyalkylenglykolen mit 2 bis 100 Ethylenoxid- und/oder Propylenoxid-Einheiten sowie die in der DE-A 19 93 17 20 und US 4 144 123 aufgeführten Verbindungen genannt. Verfahren zur Herstellung von vernetzten Polyethyleniminen sind u.a. aus den o.g. Schriften sowie EP-A 895 521 und EP-A 25 515 bekannt.

Weiterhin sind gepfropfte Polyethylenimine geeignet, wobei als Pfropfmittel sämtliche Verbindungen eingesetzt werden können, die mit den Amino- bzw. Iminogruppen der Polyethylenimine reagieren können. Geeignete Pfropfmittel und Verfahren zur Herstellung von gepfropften Polyethyleniminen sind beispielsweise der EP-A 675 914 zu entnehmen.

Ebenso geeignete Polyethylenimine im Sinne der Erfindung sind amidierte Polymerisate, die üblicherweise durch Umsetzung von Polyethyleniminen mit Carbonsäuren, deren Ester oder Anhydride, Carbonsäureamide oder Carbonsäurehalogenide erhältlich sind. Je nach Anteil der amidierten Stickstoffatome in der Polyethyleniminkette können die amidierten Polymerisate nachträglich mit den genannten Vernetzern vernetzt werden. Vorzugsweise werden hierbei bis zu 30 % der Aminofunktionen amidiert, damit für eine anschließende Vernetzungsreaktion noch genügend primäre und/oder sekundäre Stickstoffatome zur Verfügung stehen.

Außerdem eignen sich alkbxylierte Polyethylenimine, die beispielsweise durch Umsetzung von Polyethylenimin mit Ethylenoxid und/oder Propylenoxid erhältlich sind. Auch derartige alkoxylierte Polymerisate sind anschließend vernetzbar.

Als weitere geeignete erfindungsgemäße Polyethylenimine seien hydroxylgruppenhaltige Polyethylenimine und amphotere Polyethylenimine (Einbau von anionischen Gruppen) genannt sowie lipophile Polyethylenimine, die in der Regel durch Einbau langkettiger Kohlenwasserstoffreste in die Polymerkette erhalten werden. Verfahren zur Herstellung derartiger Polyethylenimine sind dem Fachmann bekannt, so daß sich weitere Einzelheiten hierzu erübrigen.

Als Komponente C) enthalten die erfindungsgemäßen Formmassen 0,05 - 2, vorzugsweise 0,1 - 1 und insbesondere 0,2 - 0,6 Gew.-% mindestens einer sterisch gehinderten Aminverbindung. Vorzugsweise kommen z.B. Verbindungen der Formel 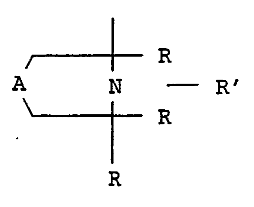 in Betracht, wobei
- R: gleiche oder verschiedene Alkylreste
- R': Wasserstoff oder einen Alkylrest und
- A': eine gegebenenfalls substituierte 2- oder 3-gliedrige Alkylenkette
bedeutet.

Bevorzugte Komponente B) sind Derivate des 2,2,6,6-Tetramethylpiperidins wie:
4-Acetoxy-2,2,6,6-tetramethylpiperidin,
4-Stearoyloxy-2,2,6,6-tetramethylpiperidin,
4-Aryloyloxy-2,2,6,6-tetramethylpiperidin,
4-Methoxy-2,2,6,6-tetramethylpiperidin,
4-Benzoyloxy-2,2,6,6-tetramethylpiperidin,
4-Cyclohexyloxy-2,2,6,6-tetramethylpiperidin,
4-Phenoxy-2,2,6,6-6-tetramethylpiperidin,
4-Benzoxy-2,2,6,6-tetramethylpiperidin,
4-(Phenylcarbamoyloxy)-2,2,6,6-tetramethylpiperidin.

Ferner sind
Bis(2,2,6,6-tetramethyl-4-piperidyl)oxalat,
Bis (2,2,6,6-tetramethyl-4-piperidyl) malonat,
Bis(2,2,6,6-tetramethyl-4-piperidyl)adipat,
Bis (1,2,2,6,6-pentamethyl-piperidyl) sebacat,
Bis(2,2,6,6-tetramethyl-4-piperidyl)terephthalat,
1,2-bis(2,2,6,6-tetramethyl-4-piperidyloxy)ethan,
Bis(2,2,6,6-tetramethyl-4-piperidyl)hexamethylen-1,6-dicarbamat,
Bis(1-methyl-2,2,6,6-tetramethyl-4-diperidyl)adipat und
Tris(2,2,6,6-tetramethyl-4-piperidyl)benzen-1,3,5-tricarboxylat geeignet.

Darüber hinaus sind höhermolekulare Piperidinderivate wie das Dimethylsuccinatpolymer mit 4-Hydroxy-2,2,6,6-tetramethyl-1-piperidinethanol oder Poly-6-(1,1,3,3-tetramethylbutyl)amino-1,3,5-triazin-2,4-diyl(2,2,6,6-tetramethyl-4-piperidinyl)imino-1,6-hexandiyl(2,2,6,6-tetramethyl-14-piperidinyl)imino geeignet, welche wie Bis(2,2,6,6-tetramethyl-4-piperidyl)-sebazat besonders gut geeignet sind.

Derartige Verbindungen sind unter der Bezeichnung Tinuvin^{®} oder Chimasorb^{®} (eingetragenes Warenzeichen der Firma Ciba-Geigy AG) im Handel erhältlich.

Als weitere besonders bevorzugte Aminverbindung B) sei Uvinul^{®} 4049 H, 4050 H und 5050 H der Firma BASF AG genannt:

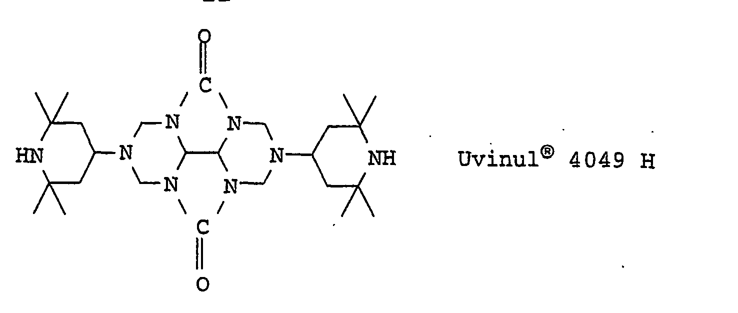

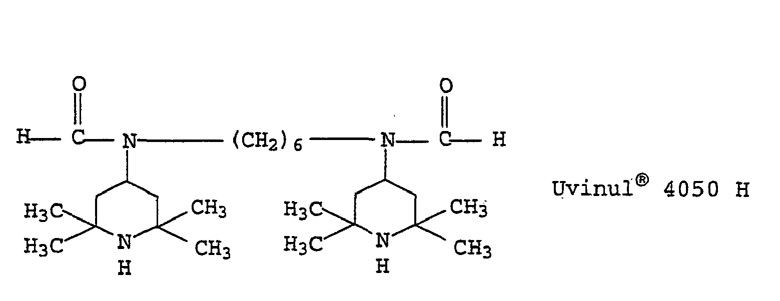

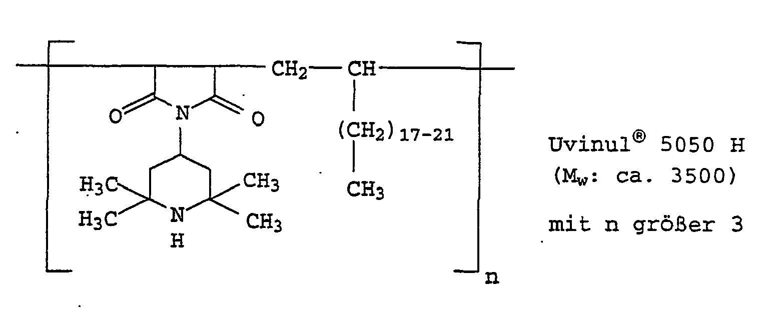

Als Komponente D) können die erfindungsgemäßen Formmassen 0 bis 70, vorzugsweise 0 bis 30 Gew.-% weiterer Zusatzstoffe enthalten.

Als sterisch gehinderte Phenole D) eignen sich prinzipiell alle Verbindungen mit phenolischer Struktur, die am phenolischen Ring mindestens eine sterisch anspruchsvolle Gruppe aufweisen.

Vorzugsweise kommen z.B. Verbindungen der Formel 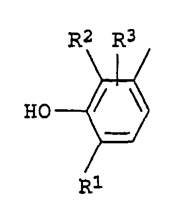 in Betracht, in der bedeuten:
R¹ und R² eine Alkylgruppe, eine substituierte Alkylgruppe oder eine substituierte Triazolgruppe, wobei die Reste R¹ und R² gleich oder verschieden sein können und R³ eine Alkylgruppe, eine substituierte Alkylgruppe, eine Alkoxigruppe oder eine substituierte Aminogruppe.

Antioxidantien der genannten Art werden beispielsweise in der DE-A 27 02 661 (US-A 4 360 617) beschrieben.

Eine weitere Gruppe bevorzugter sterisch gehinderter Phenole leiten sich von substituierten Benzolcarbonsäuren ab, insbesondere von substituierten Benzolpropionsäuren.

Besonders bevorzugte Verbindungen aus dieser Klasse sind Verbindungen der Formel 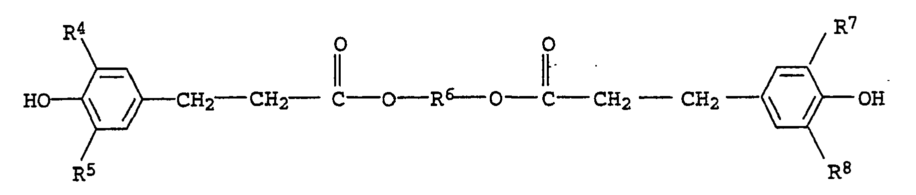 wobei R⁴, R⁵, R⁷ und R⁸ unabhängig voneinander C₁-C₈-Alkylgruppen darstellen, die ihrerseits substituiert sein können (mindestens eine davon ist eine sterisch anspruchsvolle Gruppe) und R⁶ einen zweiwertigen aliphatischen Rest mit 1 bis 10 C-Atomen bedeutet, der in der Hauptkette auch C-O-Bindungen aufweisen kann.

Bevorzugte Verbindungen, die dieser Formen entsprechen, sind

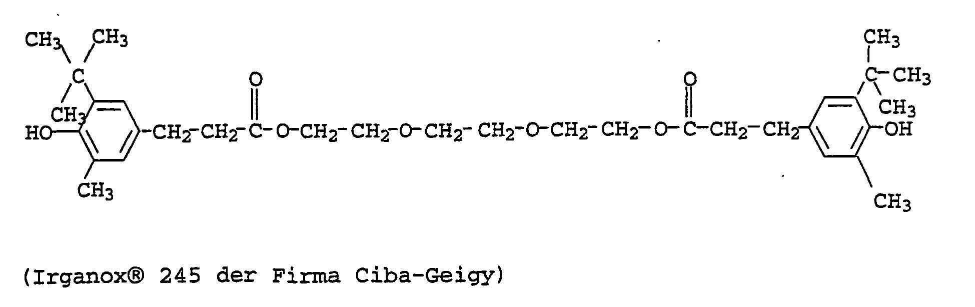

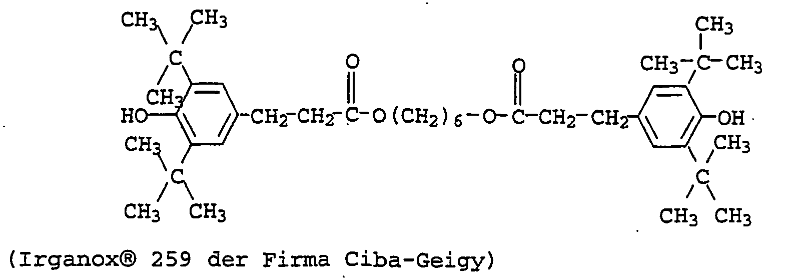

Beispielhaft genannt seien insgesamt als sterisch gehinderte Phenole:
2,2'-Methylen-bis-(4-methyl-6-tert-butylphenol), 1,6-Hexandiol-bis[3-(3,5-di-tert.-butyl-4-hydroxyphenyl)-propionat], Pentaerythril-tetrakis-[3-(3,5-di-tert.-butyl-4-hydroxyphenyl)-propionat], Distraryl-3,5-di-tert.-butyl-4-hydroxybenzylphosphonat, 2,6,7-Trioxa-1-phosphabicyclo-[2.2.2]oct-4-yl-methyl-3,5-di-tert.-butyl-4-hydroxyhydrocinnamat, 3,5-Di-tert.-butyl-4-hydroxyphenyl-3,5-distearyl-thiotriazylamin, 2-(2'-Hydroxy-3'-hydroxy-3',5'-di-tert.-butylphenyl)-5-chlorbenzotriazol, 2,6-Di-tert.-butyl-4-hydroxymethylphenol, 1,3,5-Trimethyl-2,4,6-tris-(3,5-di-tert.-butyl-4-hydroxybenzyl)-benzol, 4,4'-Methylen-bis-(2,6-di-tert.-butylphenol), 3,5-Di-tert.-butyl-4-hydroxybenzyl-dimethylamin und N,N'-Hexamethylen-bis-3,5-di-tert.-butyl-4-hydroxyhydrocinnamid.

Als besonders wirksam erwiesen haben sich und daher vorzugsweise verwendet werden 2,2'-Methylen-bis-(4-methyl-6-tert.-butylphenyl), 1,6-Hexandiol-bis-(3,5-di-tert.-butyl-4-hydroxyphenyl]-propionat (Irganox® 259), Pentaerythrityl-tetrakis-[3-(3,5-di-tert.-butyl-4-hydroxyphenyl)-propionat] und das vorstehend beschriebene Irganox® 245 der Firma Ciba Geigy, das besonders gut geeignet ist.

Die Antioxidantien (D), die einzeln oder als Gemische eingesetzt werden können, sind üblicherweise in einer Menge bis zu 2 Gew.-%, vorzugsweise von 0,005 bis 2 Gew.-%, insbesondere 0,1 bis 1 Gew.-%, bezogen auf das Gesamtgewicht der Formmassen A) bis C) enthalten.

In manchen Fällen haben sich sterisch gehinderte Phenole mit nicht mehr als einer sterisch gehinderten Gruppe in ortho-Stellung zur phenolischen Hydroxygruppe als besonders vorteilhaft erwiesen; insbesondere bei der Beurteilung der Farbstabilität bei Lagerung in diffusem Licht über längere Zeiträume.

Die als Komponenten D) verwendbaren Polyamide sind an sich bekannt. Halbkristalline oder amorphe Harze, wie sie z.B. in der Encyclopedia of Polymer Science and Engineering, Vol. 11, S. 315 bis 489, John Wiley & Sons, Inc., 1988, beschreiben werden, können eingesetzt werden, wobei der Schmelzpunkt des Polyamids vorzugsweise unter 225°C, vorzugsweise unter 215°C liegt.

Beispiele hierfür sind Polyhexamethylenazelainsäureamid, Polyhexamethylensebacinsäureamid, Polyhexamethylendodekandisäureamid, Poly-11-aminoundekansäureamid und Bis-(p-aminocyclohexyl)-methandodekansäurediamid oder die durch Ringöffnung von Lactamen, z.B. oder Polylaurinlactam erhaltenen Produkte. Auch Polyamide auf der Basis von Terephthal- oder Isophthalsäure als Säurekomponente und/oder Trimethylhexamethylendiamin oder Bis-(p-aminocyclohexyl)-propan als Diaminkomponente sowie Polyamidgrundharze, die durch Copolymerisation zweier oder mehrerer der vorgenannten Polymeren oder deren Komponenten hergestellt worden sind, sind geeignet.

Als besonders geeignete Polyamide seien Mischpolyamide auf der Grundlage von Caprolactam, Hexamethylendiamin, p,p'-Diaminodicyclohexylmethan und Adipinsäure genannt. Ein Beispiel hierfür ist das unter der Bezeichnung Ultramid® 1 C von der BASF Aktiengesellschaft vertriebene Produkt.

Weitere geeignete Polyamide werden von der Firma Du Pont unter der Bezeichnung Elvamide® vertrieben.

Die Herstellung dieser Polyamide wird ebenfalls in der vorgenannten Schrift beschrieben. Das Verhältnis von endständigen Aminogruppen zu endständigen Säuregruppen kann durch Variation des Molverhältnisses der Ausgangsverbindungen gesteuert werden.

Der Anteil des Polyamids in der erfindungsgemäßen Formmasse beträgt bis zu 2 Gew.-%, vorzugsweise 0,005 bis 1,99 Gew.-%, bevorzugt 0,01 bis 0,08 Gew.-%.

Durch die Mitverwendung eines Polykondensationsprodukts aus 2,2-Di-(4-hydroxyphenyl)propan (Bisphenol A) und Epichlorhydrin kann in manchen Fällen die Dispergierbarkeit der verwendeten Polyamide verbessert werden.

Derartige Kondensationsprodukte aus Epichlorhydrin und Bisphenol A sind kommerziell erhältlich. Verfahren zu deren Herstellung sind dem Fachmann ebenfalls bekannt. Handelsbezeichnungen der Polykondensate sind Phenoxy® (der Union Carbide Corporation) bzw. Epikote® (Firma Shell). Das Molekulargewicht der Polykondensate kann in weiten Grenzen variieren; prinzipiell sind die im Handel erhältlichen Typen sämtlich geeignet.

Als weitere Stabilisatoren können die erfindungsgemäßen Polyoximethylen-Formmassen bis zu 2,0 Gew.-%, vorzugsweise 0,005 bis 0,5 Gew.-% und insbesondere 0,01 bis 0,3 Gew.-%, bezogen auf das Gesamtgewicht der Formmassen eines oder mehrerer Erdalkalisilikate und/oder Erdalkaliglycerophosphate enthalten. Als Erdalkalimetalle zur Bildung der Silikate und Glycerophosphate haben sich vorzugsweise Calcium und insbesondere Magnesium vorzüglich bewährt. Anwendung finden zweckmäßigerweise Calciumglycerophosphat und vorzugsweise Magnesiumglycerophosphat und/oder Calciumsilikat und vorzugsweise Magnesiumsilikat, wobei als Erdalkalisilikate, insbesondere solche bevorzugt sind, die durch die Formel

Me · x SiO₂ · n H₂O

beschrieben werden, in der bedeuten
- Me: ein Erdalkalimetall, vorzugsweise Calcium oder insbesondere Magnesium,
- x: eine Zahl von 1,4 bis 10, vorzugsweise 1,4 bis 6 und
- n: eine Zahl gleich oder größer als 0, vorzugsweise 0 bis 8.

Die Verbindungen werden vorteilhafterweise in feingemahlener Form eingesetzt. Produkte mit einer durchschnittlichen Teilchengröße von kleiner als 100 µm, vorzugsweise von kleiner als 50 µm sind besonders gut geeignet.

Vorzugsweise Anwendung finden Calcium- und Magnesiumsilikate und/oder Calcium- und Magnesiumglycerophosphate. Diese können beispielsweise durch die folgenden Kenndaten näher spezifiziert werden:
Calcium- bzw.- Magnesiumsilikat:
   Gehalt an CaO bzw. MgO: 4 bis 32 Gew.-%, vorzugsweise 8 bis 30 Gew.-% und insbesondere 12 bis 25 Gew.-%,
   Verhältnis SiO₂ : CaO bzw. SiO₂ : MgO (mol/mol) : 1,4 bis 10, vorzugsweise 1,4 bis 6 und insbesondere 1,5 bis 4,
   Schüttgewicht: 10 bis 80 g/100 ml, vorzugsweise 10 bis 40 g/100 ml und durchschnittliche Kenngröße: kleiner als 100 µm, vorzugsweise kleiner als 50 µm und
Calcium- bzw. Magnesiumglycerophosphate:
   Gehalt an CaO bzw. MgO: größer als 70 Gew.-%, vorzugsweise größer als 80 Gew.-%
   Glührückstand: 45 bis 65 Gew.-%
   Schmelzpunkt: größer als 300°C und
   durchschnittliche Korngröße: kleiner als 100 µm, vorzugsweise kleiner als 50 µm.

Als bevorzugte Schmiermittel C) können die erfindungsgemäßen Formmassen bis zu 5, vorzugsweise 0,09 bis 2 und insbesondere 0,1 bis 0,7 mindestens eines Esters oder Amids gesättigter oder ungesättigter aliphatischer Carbonsäuren mit 10 bis 40 C-Atomen bevorzugt 16 bis 22 C-Atomen mit Polyolen oder aliphatischen gesättigten Alkoholen oder Aminen mit 2 bis 40 C-Atomen bevorzugt 2 bis 6 C-Atomen oder einem Ether, der sich von Alkoholen und Ethylenoxid ableitet, enthalten.

Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung aus Fettsäuren mit 30 bis 40 C-Atomen) genannt.

Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit bevorzugt sind.

Die aliphatischen Amine können 1- bis 3-wertig sein. Beispiele hierfür sind Stearylamin, Ethylendiamin, Propylendiamin, Hexamethylendiamin, Di(6-Aminohexyl)amin, wobei Ethylendiamin und Hexamethylendiamin besonders bevorzugt sind. Bevorzugte Ester oder Amide sind entsprechend Glycerindistearat, Glycerintristearat, Ethylendiamindistearat, Glycerinmonopalmitat, Glycerintrilaurat, Glycerinmonobehenat und Pentaerythrittetrastearat.

Es können auch Mischungen verschiedener Ester oder Amide oder Ester mit Amiden in Kombination eingesetzt werden, wobei das Mischungsverhältnis beliebig ist.

Weiterhin geeignet sind Polyetherpolyole oder Polyesterpolyole, welche mit ein- oder mehrwertigen Carbonsäuren, vorzugsweise Fettsäuren verestert bzw. verethert sind. Geeignete Produkte sind im Handel beispielsweise als Loxiol® EP 728 der Firma Henkel KGaA erhältlich.

Bevorzugte Ether, welche sich von Alkoholen und Ethylenoxid ableiten, weisen die allgemeine Formel

RO (CH₂ CH₂ O)ₙH

auf, in der R eine Alkylgruppe mit 6 bis 40 Kohlenstoffatomen und n eine ganze Zahl größer/gleich 1 bedeutet.

Insbesondere bevorzugt für R ist ein gesättigter C₁₆ bis C₁₈ Fettalkohol mit n ≈ 50, welcher als Lutensol ® AT 50 der Firma BASF im Handel erhältlich ist.

Die erfindungsgemäßen Formmassen können 0 bis 5, bevorzugt 0,001 bis 5 Gew.-%, vorzugsweise 0,01 bis 3 Gew.-% und insbesondere 0,05 bis 1 Gew.-% eines Melamin-Formaldehyd-Kondensates enthalten. Vorzugsweise ist dieses ein Fällungskondensat in feinteiliger Form, welches vernetzt und wasserunlöslich ist. Das Molverhältnis Formaldehyd zu Melamin beträgt vorzugsweise 1,2:1 bis 10:1, insbesondere 1,2:1 bis 2:1. Aufbau und Verfahren zur Herstellung derartiger Kondensate sind der DE-A 25 40 207 zu entnehmen.

Als Komponente D) können die erfindungsgemäßen Formmassen 0,0001 bis 1 Gew.-%, vorzugsweise 0,001 bis 0,8 Gew.-% und insbesondere 0,01 bis 0,3 Gew.-% eines Nukleierungsmittels enthalten.

Als Nukleierungsmittel kommen alle bekannten Verbindungen in Frage, beispielsweise Melamincyanurat, Borverbindungen wie Bornitrid, Kieselsäure, Pigmente wie z.B. Heliogenblau® (Kupferphtalocyaninpigment; eingetragenes Warenzeichen der BASF Aktiengesellschaft) oder verzweigte Polyoxymethylene, welche in diesen geringen Mengen eine nukleierende Wirkung zeigen.

Insbesondere wird als Nukleierungsmittel Talkum verwendet, welches ein hydratisiertes Magnesiumsilikat der Zusammensetzung Mg₃[(OH)₂/Si₄O₁₀] oder MgO · 4 SiO₂ · H₂O ist. Diese sogenannten Drei-Schicht-Phyllosilikate weisen einen triklinen, monoklinen oder rhombischen Kristallaufbau auf mit blättchenförmigem Erscheinungsbild. An weiteren Spurenelementen können Mn, Ti, Cr, Ni, Na, und K anwesend sein, wobei die OH-Gruppe teilweise durch Fluorid ersetzt sein kann.

Besonders bevorzugt wird Talkum eingesetzt, dessen Teilchengrößen zu 100 % < 20 µm beträgt. Die Teilchengrößenverteilung wird üblicherweise durch Sedimentationsanalyse bestimmt und beträgt vorzugsweise:

| | |
|---|---|
| < 20 µm | 100 Gew.-% |
| < 10 µm | 99 Gew.-% |
| < 5 µm | 85 Gew.-% |
| < 3 µm | 60 Gew.-% |
| < 2 µm | 43 Gew.-% |

Derartige Produkte sind im Handel als Micro-Talc I.T. extra (Fa. Norwegian Talc Minerals) erhältlich.

Als Füllstoffe in Mengen bis zu 50 Gew.-%, vorzugsweise 5 bis 40 Gew.-% seien beispielsweise Kaliumtitanat-Whisker, Kohlenstoff- und vorzugsweise Glasfasern genannt, wobei die Glasfasern z.B. in Form von Glasgeweben, -matten, -vliesen und/oder Glasseidenrovings oder geschnittener Glasseide aus alkaliarmem E-Glas mit einem Durchmesser von 5 bis 200 µm, vorzugsweise 8 bis 50 µm eingesetzt werden können, wobei die faserförmigen Füllstoffe nach ihrer Einarbeitung vorzugsweise eine mittlere Länge von 0,05 bis 1 µm, insbesondere 0,1 bis 0,5 µm aufweisen.

Andere geeignete Füllstoffe sind beispielsweise Calciumcarbonat oder Glaskugeln, vorzugsweise in gemahlener Form oder Mischungen dieser Füllstoffe.

Als weitere Zusatzstoffe seien, in Mengen bis zu 50, vorzugsweise 0 bis 40 Gew.-%, schlagzäh modifizierende Polymere (im folgenden auch als kautschukelastische Polymerisate oder Elastomere bezeichnet) genannt.

Bevorzugte Arten von solchen Elastomeren sind die sog. Ethylen-Propylen (EPM) bzw. Ethylen-Propylen-Dien-(EPDM)-Kautschuke.

EPM-Kautschuke haben im allgemeinen praktisch keine Doppelbindungen mehr, während EPDM-Kautschuke 1 bis 20 Doppelbindungen/100 C-Atome aufweisen können.

Als Dien-Monomere für EPDM-Kautschuke seien beispielsweise konjugierte Diene wie Isopren und Butadien, nicht-konjugierte Diene mit 5 bis 25 C-Atomen wie Penta-1,4-dien, Hexa-1,4-dien, Hexa-1,5-dien, 2,5-Dimethylhexa-1,5-dien und Octa-1,4-dien, cyclische Diene wie Cyclopentadien, Cyclohexadiene, Cyclooctadiene und Dicyclopentadien sowie Alkenylnorbornene wie 5-Ethyliden-2-norbornen, 5-Butyliden-2-norbornen, 2-Methallyl-5-norbornen, 2-Isopropenyl-5-norbornen und Tricyclodiene wie 3-Methyl-tricyclo(5.2.1.0.2.6)-3,8-decadien oder deren Mischungen genannt. Bevorzugt werden Hexa-1,5-dien-5-Ethyliden-norbornen und Dicyclopentadien. Der Diengehalt der EPDM-Kautschuke beträgt vorzugsweise 0,5 bis 50, insbesondere 1 bis 8 Gew.-%, bezogen auf das Gesamtgewicht des Kautschuks.

Die EPDM-Kautschuke können auch mit weiteren Monomeren gepfropft sein, z.B. mit Glycidyl(meth)acrylaten, (Meth)acrylsäureestern und (Meth)acrylamiden.

Eine weitere Gruppe bevorzugter Kautschuke sind Copolymere des Ethylens mit Estern von (Meth)acrylsäure. Zusätzlich können die Kautschuke noch Epoxy-Gruppen enthaltende Monomere enthalten. Diese Epoxygruppen enthaltende Monomere werden vorzugsweise durch Zugabe Epoxygruppen enthaltenden Monomeren der allgemeinen Formeln I oder II zum Monomerengemisch in den Kautschuk eingebaut 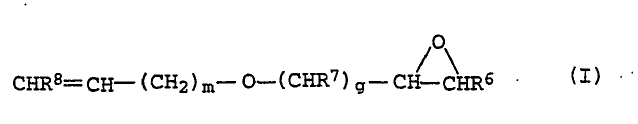 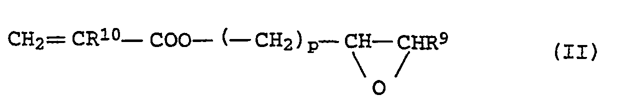 wobei R⁶ - R¹⁰ Wasserstoff oder Alkylgruppen mit 1 bis 6 C-Atomen darstellen und m eine ganze Zahl von 0 bis 20, g eine ganze Zahl von 0 bis 10 und p eine ganze Zahl von 0 bis 5 ist.

Vorzugsweise bedeuten die Reste R⁶ bis R⁸ Wasserstoff, wobei m für 0 oder 1 und g für 1 steht. Die entsprechenden Verbindungen sind Allylglycidylether und Vinylglycidylether.

Bevorzugte Verbindungen der Formel II sind Epoxygruppen-enthaltende Ester der Acrylsäure und/oder Methacrylsäure, wie Glycidylacrylat und Glycidylmethacrylat.

Vorteilhaft bestehen die Copolymeren aus 50 bis 98 Gew.-% Ethylen, 0 bis 20 Gew.-% Epoxygruppen enthaltenden Monomeren sowie der restlichen Menge an (Meth)acrylsäureestern.

Besonders bevorzugt sind Copolymerisate aus
- 50 bis 98,: insbesondere 55 bis 95 Gew.-% Ethylen, insbesondere 0,3 bis 20 Gew.-% Glycidylacrylat und/oder
- 0 bis 40,: insbesondere 0,1 bis 20 Gew.-% Glycidylmethacrylat, und
- 1 bis 50,: insbesondere 10 bis 40 Gew.-% n-Butylacrylat und/oder 2-Ethylhexylacrylat.

Weitere bevorzugte Ester der Acryl- und/oder Methacrylsäure sind die Methyl-, Ethyl-, Propyl- und i- bzw. t-Butylester.

Daneben können auch Vinylester und Vinylether als Comonomere eingesetzt werden.

Die vorstehend beschriebenen Ethylencopolymeren können nach an sich bekannten Verfahren hergestellt werden, vorzugsweise durch statistische Copolymerisation unter hohem Druck und erhöhter Temperatur. Entsprechende Verfahren sind allgemein bekannt.

Bevorzugte Elastomere sind auch Emulsionspolymerisate, deren Herstellung z.B. bei Blackley in der Monographie "Emulsion Polymerization" beschrieben wird. Die verwendbaren Emulgatoren und Katalystoren sind an sich bekannt.

Grundsätzlich können homogen aufgebaute Elastomere oder aber solche mit einem Schalenaufbau eingesetzt werden. Der schalenartige Aufbau wird u.a. durch die Zugabereihenfolge der einzelnen Monomeren bestimmt; auch die Morphologie der Polymeren wird von dieser Zugabereihenfolge beeinflußt.

Nur stellvertretend seien hier als Monomere für die Herstellung des Kautschukteils der Elastomeren Acrylate wie z.B. n-Butylacrylat und 2-Ethylhexylacrylat, entsprechende Methacrylate, Butadien und Isopren sowie deren Mischungen genannt. Diese Monomeren können mit weiteren Monomeren wie z.B. Styrol, Acrylnitril, Vinylethern und weiteren Acrylaten oder Methacrylaten wie Methylmethacrylat, Methylacrylat, Ethylacrylat und Propylacrylat copolymerisiert werden.

Die Weich- oder Kautschukphase (mit einer Glasübergangstemperatur von unter 0°C) der Elastomeren kann den Kern, die äußere Hülle oder eine mittlere Schale (bei Elastomeren mit mehr als zweischaligem Aufbau) darstellen; bei mehrschaligen Elastomeren können auch mehrere Schalen aus einer Kautschukphase bestehen.

Sind neben der Kautschukphase noch eine oder mehrere Hartkomponenten (mit Glasübergangstemperaturen von mehr als 20°C) am Aufbau des Elastomeren beteiligt,' so werden diese im allgemeinen durch Polymerisation von Styrol, Acrylnitril, Methacrylnitril, α-Methylstyrol, p-Methylstyrol, Acrylsäureestern und Methacrylsäureestern wie Methylacrylat, Ethylacrylat und Methylmethacrylat als Hauptmonomeren hergestellt. Daneben können auch hier geringere Anteile an weiteren Comonomeren eingesetzt werden.

In einigen Fällen hat es sich als vorteilhaft herausgestellt, Emulsionspolymerisate einzusetzen, die an der Oberfläche reaktive Gruppen aufweisen. Derartige Gruppen sind z.B. Epoxy-, Amino- oder Amidgruppen sowie funktionelle Gruppen, die durch Mitverwendung von Monomeren der allgemeinen Formel 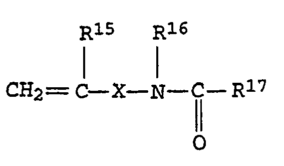 eingeführt werden können,
wobei die Substituenten folgende Bedeutung haben können:
- R¹⁵: Wasserstoff oder eine C₁- bis C₄-Alkylgruppe,
- R¹⁶: Wasserstoff, eine C₁- bis C₈-Alkylgruppe oder eine Arylgruppe, insbesondere Phenyl,
- R¹⁷: Wasserstoff, eine C₁- bis C₁₀-Alkyl-, eine C₆- bis C₁₂-Arylgruppe oder -OR₁₈
- R¹⁸: eine C₁- bis C₈-Alkyl- oder C₆- bis C₁₂-Arylgruppe, die gegebenenfalls mit O- oder N-haltigen Gruppen substituiert sein können,
- X: eine chemische Bindung, eine C₁- bis C₁₀-Alkylen- oder C₆-C₁₂-Arylengruppe oder

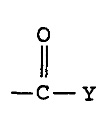

Auch die in der EP-A 208 187 beschriebenen Pfropfmonomeren sind zur Einführung reaktiver Gruppen an der Oberfläche geeignet.

Als weitere Beispiele seien noch Acrylamid, Methacrylamid und substituierte Ester der Acrylsäure oder Methacrylsäure wie (N-t-Butylamino)ethylmethacrylat, (N,N-Dimethylamino) ethylacrylat, (N,N-Dimethylamino)methylacrylat und (N,N-Diethylamino)ethylacrylat genannt.

Weiterhin können die Teilchen der Kautschukphase auch vernetzt sein. Als Vernetzer wirkende Monomere sind beispielsweise Buta-1,3-dien, Divinylbenzol, Diallylphthalat, Butandioldiacrylat und Dihydrodicyclo- pentadienylacrylat sowie die in der EP-A 50 265 beschriebenen Verbindungen.

Ferner können auch sogenannte pfropfvernetzende Monomere (graftlinking monomers) verwendet werden, d.h. Monomere mit zwei oder mehr polymerisierbaren Doppelbindungen, die bei der Polymerisation mit unterschiedlichen Geschwindigkeiten reagieren. Vorzugsweise werden solche Verbindungen verwendet, in denen mindestens eine reaktive Gruppe mit etwa gleicher Geschwindigkeit wie die übrigen Monomeren polymerisiert, während die andere reaktive Gruppe (oder reaktive Gruppen) z.B. deutlich langsamer polymerisiert (polymerisieren). Die unterschiedlichen Polymerisationsgeschwindigkeiten bringen einen bestimmten Anteil an ungesättigten Doppelbindungen im Kautschuk mit sich. Wird anschließend auf einen solchen Kautschuk eine weitere Phase aufgepfropft, so reagieren die im Kautschuk vorhandenen Doppelbindungen zumindest teilweise mit den Pfropfmonomeren unter Ausbildung von chemischen Bindungen, d.h. die aufgepfropfte Phase ist zumindest teilweise über chemische Bindungen mit der Pfropfgrundlage verknüpft.

Beispiele für solche pfropfvernetzende Monomere sind Allylgruppen enthaltende Monomere, insbesondere Allylester von ethylenisch ungesättigten Carbonsäuren wie Allylacrylat, Allylmethacrylat, Diallylmaleat, Diallylfumarat, Diallylitaconat oder die entsprechenden Monoallylverbindungen dieser Dicarbonsäuren. Daneben gibt es eine Vielzahl weiterer geeigneter pfropfvernetzender Monomeren; für nähere Einzelheiten sei hier beispielsweise auf die US-PS 4 148 846 verwiesen.

Im allgemeinen beträgt der Anteil dieser vernetzenden Monomeren an der Komponente D) bis zu 5 Gew.-%, vorzugsweise nicht mehr als 3 Gew.-%, bezogen auf D).

Nachfolgend seien einige bevorzugte Emulsionspolymerisate aufgeführt. Zunächst sind hier Pfropfpolymerisate mit einem Kern und mindestens einer äußeren Schale zu nennen, die folgenden Aufbau haben:

| Monomere für den Kern | Monomere für die Hülle |
|---|---|
| Buta-1,3-dien, Isopren, n-Butylacrylat, Ethylhexyl-acrylat oder deren Mischungen, ggf. zusammen mit vernetzenden Monomeren | Styrol, Acrylnitril, (Meth)-acrylate, gegebenenfalls mit reaktiven Gruppen wie hierin beschrieben |

Anstelle von Pfropfpolymerisaten mit einem mehrschaligen Aufbau können auch homogene, d.h. einschalige Elastomere aus Buta-1,3-dien, Isopren und n-Butylacrylat oder deren Copolymeren eingesetzt werden. Auch diese Produkte können durch Mitverwendung von vernetzenden Monomeren oder Monomeren mit reaktiven Gruppen hergestellt werden.

Die beschriebenen Elastomere D) können auch nach anderen üblichen Verfahren, z.B. durch Suspensionspolymerisation, hergestellt werden.

Selbstverständlich können auch Mischungen der vorstehend aufgeführten Kautschuktypen eingesetzt werden.

Die erfindungsgemäßen Formmassen können noch weitere übliche Zusatzstoffe und Verarbeitungshilfsmittel enthalten. Nur beispielhaft seien hier Zusätze zum Abfangen von Formaldehyd (Formaldehyd-Scavenger), Weichmacher, Haftvermittler und Pigmente genannt. Der Anteil solcher Zusätze liegt im allgemeinen im Bereich von 0,001 bis 5 Gew.-%.

Die Herstellung der erfindungsgemäßen thermoplastischen Formmassen erfolgt durch Mischen der Komponenten in an sich bekannter Weise, weshalb sich hier detaillierte Angaben erübrigen. Vorteilhaft erfolgt die Mischung der Komponenten auf einem Extruder.

Die Komponente B) sowie gegebenenfalls die Komponente(n) C) können in einer bevorzugten Herstellungsform vorzugsweise bei Raumtemperaturen auf das Granulat von A) aufgebracht und anschließend extrudiert werden.

Aus den Formmassen lassen sich Formkörper (auch Halbzeuge, Folien, Filme und Schäume) aller Art herstellen. Die Formmassen zeichnen sich durch eine verbesserte Stabilität bei thermischer Belastung und gleichzeitig guten Farbeigenschaften (obwohl eine stickstoffhaltige Verbindung zugegeben wird) sowie verbesserte Dieselkraftstoffbeständigkeit aus. Daher eignen sich derartige Formkörper insbesondere zur Anwendung als Kettenglieder, Gleitrollen, Gleitschienen, Zahnräder, dieselkraftstoffbeständige Formteile im KFZ-Motor sowie Motorraum- und Lagerelemente für den KFZ-Antriebs- und Lenkungsbereich wie Kraftstoffentnahmevorrichtung, Roll-over Ventile, Dieselkraftstoffleistungen, Unterdruckventile, Halterungen für Dieselkraftstoffpumpen, Pumpengehäuse, Innenteile für Dieselkraftstoffpumpen, insbesondere Läufer und Starter im Elektromotor.

### Beispiele

Es wurden folgende Komponenten eingesetzt:

### Komponente A

Polyoxymethylencopolymerisat aus 98,8 Gew.-% Trioxan und 1,2 Gew.-% Butandiolformal. Das Produkt enthielt noch ungefähr 3 Gew. -% nicht umgesetztes Trioxan und 5 Gew. -% thermisch instabile Anteile. Nach Abbau der thermisch instabilen Anteile hatte das Copolymer eine Schmelzvolumenrate von 11 cm³/10 Min. (190°C, 2,16 kg, nach ISO 1133/B).

### Komponente B/1

Polyethylenimin mit M_{w}- bestimmt durch Lichtstreuung - von 750000 und einer Viskosität gemäß ISO 2555 bei 20°C von ca. 24000 mPas (Lupasol^{®} P der BASF AG)

### Komponente B/2

Polyethylenimin mit M_{w} - bestimmt durch Lichtstreuung - von 750000 und einer Viskosität gemäß ISO 2555 bei 20°C von ca. 1400 mPas (Lupasol^{®}PS der BASF AG)

### Komponente C

Uvinul^{®} 4050 H der BASF AG:

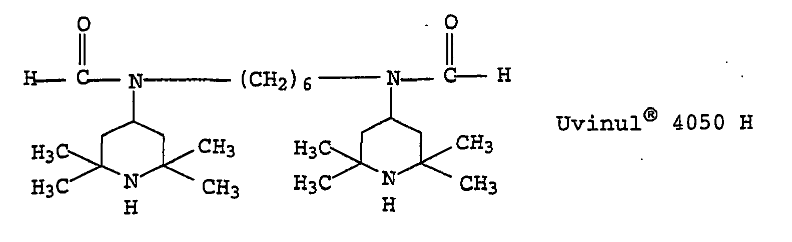

### Komponente D/1

Irganox^{®} 245 der Firma Ciba Geigy:

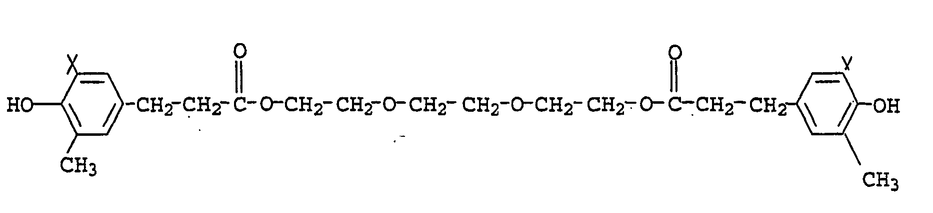

### Komponente D/2

Irganox^{®} 1010 der Firma Ciba Geigy:
Pentaerythritol Tetrakis (3-(3,5-di-tert.-butyl-4-hydroxyphenyl)propionate)

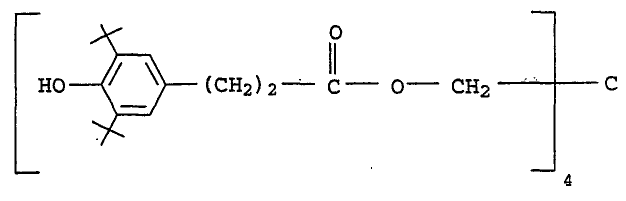

### Komponente D/3

Polyamid-Oligomeres mit einem Molekulargewicht von etwa 3000, hergestellt aus Caprolactam, Hexamethylendiamin, Adipinsäure und Propionsäure (als Molekulargewichtsregler) in Anlehnung an die Beispiele 5-4 der US-A 3 960 984 ("PA-dicapped").

### Komponente D/4

Synthetisches Mg-Silicat (Ambosol^{®} Firma Societe Nobel, Puteaux) mit folgenden Eigenschaften:

| | |
|---|---|
| Gehalt an MgO | ≥ 14,8 Gew.-% |
| Gehalt an SiO₂ | ≥ 59 Gew.-% |
| Verhältnis SiO₂:MgO | 2,7 mol/mol |
| Schüttdichte | 20 bis 30 g/100 m |
| Glühverlust | < 25 Gew.-% |

### Komponente D/5

Ein Melamin-Formaldehyd-Kondensat gemäß Beispiel 1 der DE-A 25 40 207.

### Komponente D/6

### Loxiol^{®} P 1200 der Firma Cognis: Glycerindistearat

Jede Mischung enthielt als Verarbeitungshilfsmittel 0,35 Gew.-% Komponente D/1 0,1 Gew.-% Komponente D/2, 0,04 Gew.-% Komponente D/3, 0,05 Gew.-% Komponente D/4, 0,20 Gew.-% Komponente D/5 und 0,15 Gew.-% Komponente D/6.

Zur Herstellung der Mischungen wurde Komponente A mit den in Tabelle 1 angegebenen Mengen der Komponenten B/1, B/2 und C und den vorstehend beschriebenen Mengen der Komponenten D/1, D/2, D/3, D/4, D/5 und D/6 gemischt und in einem Zweischneckenextruder bei 220°C compoundiert, entgast und als Strang ausgepresst sowie granuliert. Anschließend wurden bei 190°C spritzgegossene Probekörper hergestellt.

Die Beständigkeit von Polyacetal-Werkstoffen gegen heißen Dieselkraftstoff wurde im Labor anhand der Änderung der Masse unter Verwendung standardisierter Probekörper ermittelt. Zur Erzielung höherer Praxisnähe und kürzerer Prüfzeiten wurden zweckmäßigerweise 1 mm dicke Probekörper verwendet, wie sie durch Verkleinerung der in ISO 527 vorgehenen 4 mm dicken Probekörper des Typs 1A um den Faktor 4 erhalten werden (im folgenden kurz als Viertel-ISO-Stäbe" bezeichnet".

Die Resultate der Lagerung der Polyacetal-Probekörpern in heißem Dieselkraftstoff hängen von einer Vielzahl von Parametern ab, insbesondere von folgenden:
- Lagertemperatur
- Probekörpergeometrie
- Verhältnis Probekörperanzahl/Dieselkraftstoffvolumen
- Art des Dieselkraftstoffs (selbst bei standardisierten Referenzkraftstoffen sind häufig erhebliche Schwankungen der Ergebnisse von Batch zu Batch zu beobachten)
- Häufigkeit des Dieselkraftstoffwechsels
- Luft- bzw. Sauerstoffzufuhr.

Es hat sich gezeigt, dass zur Erlangung aussagefähiger, verwertbarer Ergebnisse die Mitlagerung von Probekörpern aus POM-Referenzwerkstoffen mit bekannter Performance unbedingt erforderlich ist. Als POM-Referenzwerkstoff wurde Ultraform^{®} S 1320 003 eingesetzt.

Für die nachstehenden Beispiele und Vergleichsbeispiele wurden der folgende Aufbau und die folgenden Randbedingungen gewählt:
- Autoklav, aus V2A-Edelstahl gefertigt, Volumen 3 Liter, zur Hälfte mit dem Referenzkraftstoff CEC-RF 90-A-92 der Fa. Haltermann, Hamburg, gefüllt
- pro Autoklav 60 spritzgegossene Viertel-ISO-Stäbe (je 15 aus einer bestimmten Charge von Ultraform S 1320 003 ungefärbt und drei weiteren Werkstoff-Formulierungen)
- Lagertemperatur 100°C
- kein Kraftstoffwechsel
- Beobachtung der Massenänderung durch Wiegen von jeweils 5 Probekörpern aller im Autoklaven befindlichen Werkstoff-Formulierungen bei Raumtemperatur; die Probekörper wurden nach der Entnahme aus dem Autoklaven mit saugfähigem Papier vorsichtig von anhaftenden Kraftstoffresten befreit und auf Raumtemperatur abgekühlt
- zu dem Zeitpunkt, zu dem die aus dem Referenzwerkstoff gefertigten Probekörper 40 % ihrer Ausgangsmasse verloren haben, wird ebenfalls der Massenverlust für die anderen im Autoklaven befindlichen Werkstoff-Formulierungen ermittelt; der Quotient Massenverlust Referenzwerkstoff/Massenverlust Werkstoff-Formulierung zu diesem Zeitpunkt liefert den Werkstoff-Kennwert k1.

Der Werkstoff-Kennwert k1 eignet sich zur vergleichenden Beurteilung der Heißdieselbeständigkeit der untersuchten Werkstoff-Formulierung. Gilt k1 > 1, so wird die Beständigkeit des Referenzwerkstoffes übertroffen. Je höher k1, desto besser die Beständigkeit.

Die Ergebnisse der Messungen und die Zusammensetzungen der Formmassen ist der Tabelle zu entnehmen.

**Tabelle**

| Beispiel | B/1 | B/2 | C | k1 |
|---|---|---|---|---|
| 1 | 0,05 | - | 0,2 | 7,2 |
| 2 | - | 0,05 | 0,2 | 5,0 |
| V1 | 0,05 | - | - | 1,8 |
| V2 | - | 0,05 | - | 1,6 |
| V3 | - | - | 0,2 | 2,1 |

Die Beispiele 1 und 2 belegen die für die Heißdieselstabilisierung vorteilhafte Kombination von Polyethyleniminen mit sterisch gehinderten Aminen.

## Patentansprüche

1. Thermoplastische Formmassen, enthaltend als wesentliche Komponenten
A) 29 bis 99,9 Gew.-% mindestens eines thermoplastischen Polyoxymethylenhomo- oder -copolymerisates oder deren Mischungen,
B) 1 ppb bis 5 Gew. -% mindestens eines Polyethyleniminhomo- oder -copolymerisates,
C) 0,05 bis 2 Gew.-% mindestens einer sterisch gehinderten Aminverbindung,
sowie darüber hinaus
D) 0 bis 70 Gew.-% weiterer Zusatzstoffe,
wobei die Gewichtsprozente der Komponenten A) bis D) stets 100 % ergeben.

2. Thermoplastische Formmassen nach Anspruch 1, wobei die Polyethylenimin-Polymerisate ausgewählt sind aus
- Homopolymeren des Ethylenimins,
- Copolymeren aus Ethylenimin und Aminen mit mindestens zwei Aminogruppen,
- vernetzten Polyethyleniminen,
- gepfropften Polyethyleniminen,
- amidierten Polymerisaten erhältlich durch Umsetzung von Polyethyleniminen mit Carbonsäuren oder Carbonsäureestern, -anhydriden, -amiden oder -halogeniden,
- alkoxylierten Polyethyleniminen,
- hydroxylgruppenhaltigen Polyethyleniminen,
- amphoteren Polyethyleniminen, und
- lipophilen Polyethyleniminen.

3. Thermoplastische Formmassen nach den Ansprüchen 1 oder 2, wobei der Anteil der Polyethylenimin-Polymerisate B) 1 ppm bis 0,1 Gew.-% beträgt.

4. Thermoplastische Formmassen nach den Ansprüchen 1 bis 3, enthaltend als Komponente C) mindestens eine Verbindung der Formel 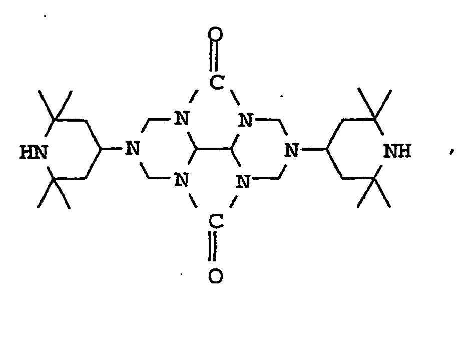 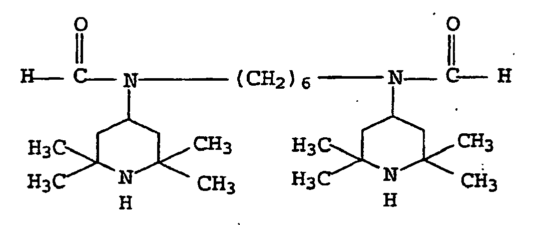 oder 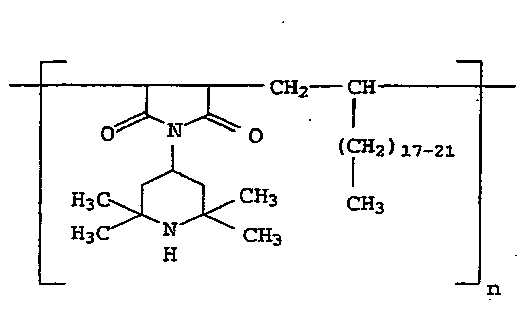 mit n größer 3
oder deren Mischungen.

5. Verfahren zur Erhöhung der thermischen Stabilität oder/und Dieselkraftstoffbeständigkeit, **dadurch gekennzeichnet, daß** man einem Polyoxymethylenhomo- oder copolymerisat A) 1 ppb bis 5 Gew.-% eines Polyethyleniminhomo- oder -copolymerisat B) und 0,05 bis 2 Gew. -% mindestens einer sterisch gehinderten Aminverbindung zufügt.

6. Verwendung von thermoplastischen Formmassen gemäß den Ansprüchen 1 bis 4 zur Herstellung von Formkörpern, Folien, Fasern und Schäumen.

7. Formkörper, Folien, Fasern und Schäume erhältlich aus den thermoplastischen Formmassen gemäß den Ansprüchen 1 bis 4.

8. Dieselkraftstoffbeständige und/oder thermisch stabilisierte Polyoxymethylenhomo- oder -copolymerisatformkörper erhältlich gemäß des Verfahrens nach Anspruch 5 oder aus den thermoplastischen Formmassen gemäß den Ansprüchen 1 bis 4.

## Claims

1. A thermoplastic molding composition comprising, as substantive components,
A) from 29% by weight to 99% by weight of at least one thermoplastic homo- or copolyoxymethylene, or a mixture of these,
B) from 1 ppb to 5% by weight of at least one polyethyleneimine homo- or copolymer,
C) from 0.05 to 2% by weight of at least one sterically hindered amine compound,
and also
D) from 0 to 70% by weight of other additives,
where the percentages by weight of components A) to D) always give 100%.

2. The thermoplastic molding composition according to claim 1, where the polyethyleneimine polymers have been selected from
- homopolymers of ethyleneimine,
- copolymers of ethyleneimine and amines having at least two amino groups,
- crosslinked polyethyleneimines,
- grafted polyethyleneimines,
- amidated polymers obtainable by reacting polyethyleneimines with carboxylic acids or with carboxylic esters, with carboxylic anhydrides, with carboxamides, or with carbonyl halides,
- alkoxylated polyethyleneimines,
- polyethyleneimines containing hydroxyl groups,
- amphoteric polyethyleneimines, and
- lipophilic polyethyleneimines.

3. The thermoplastic molding composition according to claim 1 or 2, where the proportion of the polyethyleneimine polymers B) is from 1 ppm to 0.1% by weight.

4. The thermoplastic molding composition according to any of claims 1 to 3, comprising, as component C), at least one compound of the formula 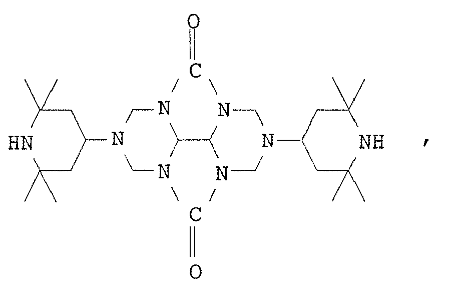 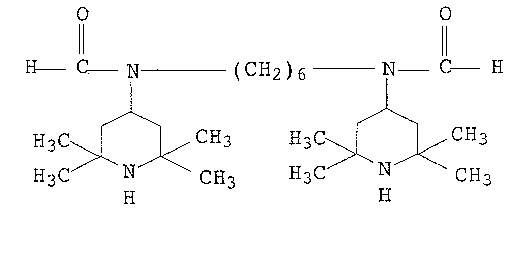 or 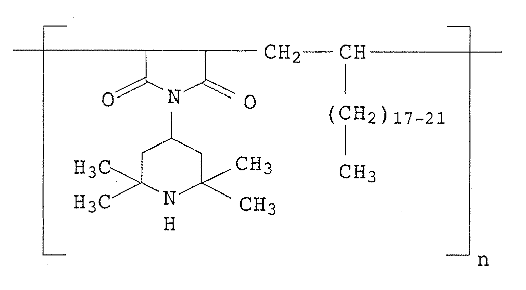 where n is greater than 3,
or a mixture of these.

5. A process for increasing thermal stability and/or diesel-fuel resistance, which comprises adding from 1 ppb to 5% by weight of a polyethyleneimine homo- or copolymer B) and from 0.05 to 2% by weight of at least one sterically hindered amine compound to a polyoxymethylene homo- or copolymer A).

6. The use of thermoplastic molding compositions according to any of claims 1 to 4 for producing moldings, films, fibers, or foams.

7. A molding, a film, a fiber, or a foam obtainable from the thermoplastic molding compositions according to any of claims 1 to 4.

8. A diesel-fuel-resistant and/or heat-resistant polyoxymethylene homo- or copolymer molding obtainable by the process according to claim 5, or from the thermoplastic molding compositions according to any of claims 1 to 4.

## Revendications

1. Matières moulables thermoplastiques contenant comme constituants principaux :
A) 29 à 99,9 % en poids d'au moins un homopolymère ou un copolymère de polyoxyméthylène thermoplastique ou de leurs mélanges,
B) 1 ppb à 5 % en poids d'au moins un homopolymère ou un copolymère de polyéthylèneimine,
C) 0,05 à 2 % en poids d'au moins un composé amine à empêchement stérique, ainsi que
D) 0 à 70 % en poids d'autres additifs,
la somme des pourcentages en poids des constituants A) à D) étant toujours égale à 100 %.

2. Matières moulables thermoplastiques selon la revendication 1, où les polymères de polyéthylèneimine sont choisis parmi :
- des homopolymères de l'éthylèneimine,
- des copolymères d'éthylèneimine et d'amines comportant au moins deux groupes amino,
- des polyéthylèneimines réticulées,
- des polyéthylèneimines greffées,
- des polymères amidifiés que l'on peut obtenir par réaction de polyéthylèneimines avec des acides carboxyliques ou des esters, anhydrides, amides
ou halogénures d'acide carboxylique,
- des polyéthylèneimines alcoxylées,
- des polyéthylèneimines contenant des groupes hydroxyle,
- des polyéthylèneimines amphotères, et
- des polyéthylèneimines lipophiles.

3. Matières moulables thermoplastiques selon la revendication 1 ou 2, où la proportion du polymère de polyéthylèneimine B) est de 1 ppm à 0,1 % en poids.

4. Matières moulables thermoplastiques selon les revendications 1 à 3, qui contiennent comme constituant C) au moins un composé de formule 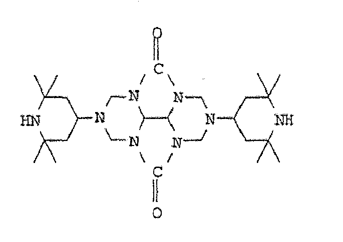 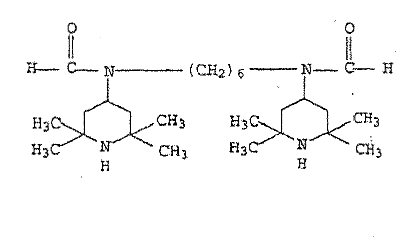 ou 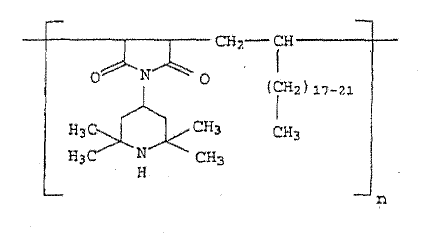 n étant supérieur à 3
ou leurs mélanges.

5. Procédé pour augmenter la stabilité thermique et/ou la résistance au carburant Diesel, **caractérisé en ce qu'**il est ajouté à un homopolymère ou à un copolymère de polyoxyméthylène A) de 1 ppb à 5 % en poids d'un homopolymère ou un copolymère de polyéthylèneimine B) et de 0,05 à 2 % en poids d'au moins un composé amine à empêchement stérique.

6. Utilisation de matières moulables thermoplastiques selon les revendications 1 à 4 pour la préparation de corps façonnés, de feuilles, de fibres et de mousses.

7. Corps façonnés, feuilles, fibres et mousses pouvant être obtenus à partir de matières moulables thermoplastiques selon les revendications 1 à 4.

8. Corps façonnés formés d'un homopolymère ou un copolymère de polyoxyméthylène résistants au carburant Diesel et/ou stabilisés thermiquement pouvant être obtenus par le procédé selon la revendication 5 ou à partir des matières moulables thermoplastiques selon les revendications 1 à 4.
